# EUROPEAN PATENT SPECIFICATION

(11) **EP 2 068 643 B1**
(45) Date of publication and mention of the grant of the patent: **06.06.2012**
(21) Application number: 07842508.9
(22) Date of filing: 14.09.2007
(51) Int. Cl.: A23L 1/325, A23J 3/14, A23J 3/22, A23J 3/26, A23J 3/16, A23J 3/18

(54) **RETORTED FISH COMPOSITIONS COMPRISING STRUCTURED PLANT PROTEIN PRODUCTS**
RETORTENFISCHZUSAMMENSETZUNGEN MIT STRUKTURIERTEN PFLANZENPROTEINPRODUKTEN
COMPOSITIONS DE POISSON AUTOCLAVÉES RENFERMANT DES PRODUITS À BASE DE PROTÉINES VÉGÉTALES STRUCTURÉES

(30) Priority: 15.09.2006 US 825801 P; 10.09.2007 US 852637
(43) Date of publication of application: 17.06.2009
(73) Proprietor: Solae, LLC, St. Louis, MO 63110 (US)
(72) Inventor: MUELLER, Izumi, Glen Carbon, IL 62034 (US); ALTEMUELLER, Patricia A., Webster Groves, Missouri 63119 (US); SANDOVAL, Arno, Wildwood, Missouri 63038 (US)
(74) Representative: Hirsch & Associés
(86) International application number: PCT/US2007/078499
(87) International publication number: WO 2008/034063

(56) References cited:
- JP-A- 61 260 839
- JP-A- 63 068 060
- US-A- 3 928 652
- DATABASE WPI Week 198343 Derwent Publications Ltd., London, GB; AN 1983-797632 XP002464088 & JP 58 155060 A (CHO-CHOKAN S) 14 September 1983 (1983-09-14)

## Description

### FIELD OF THE INVENTION

The present invention provides retorted fish compositions. The invention also provides processes for producing the retorted fish compositions and simulated fish compositions.

### BACKGROUND OF THE INVENTION

The American Heart Association recommends that healthy adults eat at least two servings of fish per week, particularly fish that contain omega-3 fatty acids, such as tuna, salmon, mackerel, herring, sardines and lake trout. Consumption of fish rich in omega-3 fatty acids is associated with decreased risk of heart diseases, reduction of cholesterol levels, regulation of high blood pressure, and prevention of arteriosclerosis. Increased demand for fish has reduced the wild populations, which has lead to increased prices. Thus, attempts have been made to develop acceptable fish like products from relatively inexpensive plant protein sources.

Food scientists have devoted much time developing methods for preparing acceptable meat-like food products, such as beef, pork, poultry, fish, and shellfish analogs, from a wide variety of plant proteins. Soy protein has been utilized as a protein source because of its relative abundance and reasonably low cost. Extrusion processes typically prepare meat analogs. Upon extrusion, the extrudate generally expands to form a fibrous material. To date, meat analogs made from high protein extrudates have had limited acceptance because they lack meat-like texture characteristics and mouth feel. Rather, they are characterized as spongy and chewy, largely due to the random, twisted nature of the protein fibers that are formed. Most are used as extenders for ground, hamburger-type meats.

The JP61260839 document relates to a process for the production of a composite food having the palatability similar to shrimp, crab, cuttlefish or lobster, etc., by mixing a fish paste product with a fibrous structure to impart a directivity to the product and, at the same time, pressing the mixture in a molding frame. A fibrous structure is produced by conventional method from a kneaded mixture of fish or cattle meat, separated vegetable protein, polysaccharide, etc. The fibrous structure is mixed into various paste product made from animal proteins such as fish meat, cattle meat, etc., vegetable proteins such as soybean protein, wheat protein, etc., to orient the fibrous structure along a definite direction in the obtained kneaded mixture and, at the same time, the mixture is poured into a molding frame and coagulated by heating under pressure.

There is a still an unmet need for a plant protein product that simulates the fibrous structure of animal and fish meat and has an acceptable meat-like texture.

### SUMMARY OF THE INVENTION

One aspect of the present invention encompasses a retorted fish composition as claimed in claim 1 and in the following dependant claims. Typically, the retorted fish composition comprises fish meat and a structured plant protein product comprising protein fibers that are substantially aligned.

Yet another aspect of the invention provides a process for producing a retorted simulated fish composition as claimed in claim 9 and in the following dependant claims or a retorted fish composition as claimed in claim 12 and in the following dependant claims. In each process, an appropriate colorant is combined with a structured plant protein product having protein fibers that are substantially aligned. Fish meat may optionally be added. The process comprises retort cooking of the composition.

Other aspect and features of the invention are described in more detail below.

### FIGURE LEGENDS

The application file contains at least one photograph executed in color. Copies of this patent application publication with color photographs will be provided by the Office upon request and payment of the necessary fee.

**Figure 1** depicts a photographic image of a retorted tuna fish composition of the invention (panel (B)) compared to commercially available retorted tuna (panel (A)).

**Figure 2** depicts a photographic image of a micrograph showing a structured plant protein product of the invention having protein fibers that are substantially aligned,

**Figure 3** depicts a photographic image of a micrograph showing a plant protein product not produced by the process of the present invention. The protein fibers comprising the plant protein product, as described herein, are crosshatched.

### DETAILED DESCRIPTION OF THE INVENTION

The present invention provides retorted fish compositions and retorted simulated fish and processes for producing retorted fish compositions. The retorted fish composition will comprise fish meat and structured plant protein products having protein fibers that are substantially aligned. Alternatively, the retorted simulated fish composition will comprise structured plant protein products having protein fibers that are substantially aligned. Advantageously, the process of the invention utilizes coloring systems such that both the retorted fish compositions and simulated fish compositions have the color and texture of retort cooked fish meat. In addition, the retorted fish compositions also generally have the flavor of retort cooked fish meat.

### (I) Structured Plant Protein Products

The retorted fish compositions of the invention comprise structured plant protein products comprising protein fibers that are substantially aligned, as described in more detail in I (c) below. In an exemplary embodiment, the structured plant protein products are extrudates of plant materials that have been subjected to the extrusion process detailed in I(b) below. Because the structured plant protein products utilized in the invention have protein fibers that are substantially aligned in a manner similar to fish meat, the retorted fish compositions and simulated fish compositions generally have the texture and feel of compositions containing all fish meat.

### (a) protein-containing starting material

A variety of ingredients that contain protein may be utilized in an extrusion process to produce structured plant protein products suitable for use in the invention. While ingredients comprising proteins derived from plants are typically used, it is also envisioned that proteins derived from other sources, such as animal sources, may be utilized without departing from the scope of the invention. For example, a dairy protein selected from the group consisting of casein, caseinates, whey protein, and mixtures thereof may be utilized. In an exemplary embodiment, the dairy protein is whey protein. By way of further example, an egg protein selected from the group consisting of ovalbumin, ovoglobulin, ovomucin, ovomucoid, ovotransferrin, ovovitella, ovovitellin, albumin globulin, and vitellin may be utilized.

It is envisioned that other ingredient types in addition to proteins may be utilized. Not limiting examples of such ingredients include sugars, starches, oligosaccharides, soy fiber and other dietary fibers, and gluten.

It is also envisioned that the protein-containing starting materials may be gluten-free. Because gluten is typically used in filament formation during the extrusion process, if a gluten-free starting material is used, an edible crosslink agent may be utilized to facilitate filament formation. Non-limiting examples of suitable crosslink agents include Konjac glucomannan (KGM) flour, edible crosslink agents, beta glucan, such as Pureglucan^{®} manufactured by Takeda (USA), calcium salts, and magnesium salts. One skilled in the art can readily determine the amount of crosslinker needed, if any, in gluten-free embodiments.

Irrespective of its source or ingredient classification, the ingredients utilized in the extrusion process are typically capable of forming structured plant protein products having protein fibers that are substantially aligned. Suitable examples of such ingredients are detailed more fully below.

### (i) plant protein materials

In an exemplary embodiment, at least one ingredient derived from a plant will be utilized to form the protein-containing materials. Generally speaking, the ingredient will comprise a protein. The amount of protein present in the ingredient(s) utilized can and will vary depending upon the application. For example, the amount of protein present in the ingredient(s) utilized may range from about 40% to about 100% by weight. In another embodiment, the amount of protein present in the ingredient(s) utilized may range from about 50% to about 100% by weight. In an additional embodiment, the amount of protein present in the ingredient(s) utilized may range from about 60% to about 100% by weight. In a further embodiment, the amount of protein present in the ingredient(s) utilized may range from about 70% to about 100% by weight. In still another embodiment, the amount of protein present in the ingredient(s) utilized may range from about 80% to about 100% by weight. In a further embodiment, the amount of protein present in the ingredient(s) utilized may range from about 90% to about 100% by weight.

The ingredient(s) utilized in extrusion may be derived from a variety of suitable plants. By way of non-limiting example, suitable plants include legumes, corn, peas, canola, sunflowers, sorghum, rice, amaranth, potato, tapioca, arrowroot, canna, lupin, rape seed, wheat, oats, rye, barley, and mixtures thereof.

In one embodiment, the ingredients are isolated from wheat and soybeans. In another exemplary embodiment, the ingredients are isolated from soybeans. Suitable wheat derived protein-containing ingredients include wheat gluten, wheat flour, and mixtures thereof. Examples of commercially available wheat gluten that may be utilized in the invention include Gem of the Star Gluten, Vital Wheat Gluten (organic) each of which is available from Manildra Milling. Suitable soybean derived protein-containing ingredients ("soy protein material") include soybean protein isolate, soy protein concentrate, soy flour, and mixtures thereof, each of which are detailed below. In each of the foregoing embodiments, the soybean material may be combined with one or more ingredients selected from the group consisting of a starch, flour, gluten, a dietary fiber, and mixtures thereof.

Suitable examples of protein-containing material isolated from a variety of sources are detailed in Table A, which shows various combinations.

**Table A Protein Combinations**

| First protein source | second ingredient |
|---|---|
| soybean | wheat |
| soybean | dairy |
| soybean | egg |
| soybean | corn |
| soybean | rice |
| soybean | barley |
| soybean | sorghum |
| soybean | oat |
| soybean | millet |
| soybean | rye |
| soybean | triticale |
| soybean | buckwheat |
| soybean | pea |
| soybean | peanut |
| soybean | lentil |
| soybean | lupin |
| soybean | channa (garbonzo) |
| soybean | rapeseed (canola) |
| soybean | cassava |
| soybean | sunflower |
| soybean | whey |
| soybean | tapioca |
| soybean | arrowroot |
| soybean | amaranth |
| soybean | wheat and dairy |
| soybean | wheat and egg |
| soybean | wheat and corn |
| soybean | wheat and rice |
| soybean | wheat and barley |
| soybean | wheat and sorghum |
| soybean | wheat and oat |
| soybean | wheat and millet |
| soybean | wheat and rye |
| soybean | wheat and triticale |
| soybean | wheat and buckwheat |
| soybean | wheat and pea |
| soybean | wheat and peanut |
| soybean | wheat and lentil |
| soybean | wheat and lupin |
| soybean | wheat and channa (garbonzo) |
| soybean | wheat and rapeseed (canola) |
| soybean | wheat and cassava |
| soybean | wheat and sunflower |
| soybean | wheat and potato |
| soybean | wheat and tapioca |
| soybean | wheat and arrowroot |
| soybean | wheat and amaranth |
| soybean | corn and wheat |
| soybean | corn and dairy |
| soybean | corn and egg |
| soybean | corn and rice |
| soybean | corn and barley |
| soybean | corn and sorqhum |
| soybean | corn and oat |
| soybean | corn and millet |
| soybean | corn and rye |
| soybean | corn and triticale |
| soybean | corn and buckwheat |
| soybean | corn and pea |
| soybean | corn and peanut |
| soybean | corn and lentil |
| soybean | corn and lupin |
| soybean | corn and channa (garbonzo) |
| soybean | corn and rapeseed (canola) |
| soybean | corn and cassava |
| soybean | corn and sunflower |
| soybean | corn and potato |
| soybean | corn and tapioca |
| soybean | corn and arrowroot |
| soybean | corn and amaranth |

In each of the embodiments delineated in Table A, the combination of protein-containing materials may be combined with one or more ingredients selected from the group consisting of a starch, flour, gluten, a dietary fiber, and mixtures thereof. In one embodiment, the protein-containing material comprises protein, starch, gluten, and fiber. In an exemplary embodiment, the protein-containing material comprises from about 45% to about 65% soy protein on a dry matter basis; from about 20% to about 30% wheat gluten on a dry matter basis; from about 10% to about 15% wheat starch on a dry matter basis; and from about 1% to about 5% starch on a dry matter basis. In each of the foregoing embodiments, the protein-containing material may comprise dicalcium phosphate, L-cysteine or combinations of both dicalcium phosphate and L-cysteine.

### (ii) soy protein materials

In an exemplary embodiment, as detailed above, soy protein isolate, soy protein concentrate, soy flour, and mixtures thereof may be utilized in the extrusion process. The soy protein materials may be derived from whole soybeans in accordance with methods generally known in the art. The whole soybean may be standard soybeans (i.e., non genetically modified soybeans), commoditized soybeans, genetically modified soybeans, and combinations thereof.

Generally speaking, when soy isolate is used, an isolate is preferably selected that is not a highly hydrolyzed soy protein isolate. In certain embodiments, highly hydrolyzed soy protein isolates, however, may be used in combination with other soy protein isolates provided that the highly hydrolyzed soy protein isolate content of the combined soy protein isolates is generally less than about 40% of the combined soy protein isolates, by weight. Additionally, the soy protein isolate utilized preferably has an emulsion strength and gel strength sufficient to enable the protein in the isolate to form fibers that are substantially aligned upon extrusion. Examples of soy protein isolates that are useful in the present invention are commercially available, for example, from Solae, LLC (St. Louis, Mo.), and include SUPRO^{®} 500E, SUPRO^{®} EX 33, SUPRO^{®} 620, SUPRO^{®} 630, and SUPRO^{®} EX 45. In an exemplary embodiment, a form of SUPRO^{®} 620 is utilized as detailed in Example 3.

Alternatively, soy protein concentrate may be blended with the soy protein isolate to substitute for a portion of the soy protein isolate as a source of soy protein material. Typically, if a soy protein concentrate is substituted for a portion of the soy protein isolate, the soy protein concentrate is substituted for up to about 40% of the soy protein isolate by weight, at most, and more preferably is substituted for up to about 30% of the soy protein isolate by weight. Examples of suitable soy protein concentrates useful in the invention include Promine DSPC, Procon, Alpha 12 and Alpha 5800, which are commercially available from Solae, LLC (St. Louis, Mo.).

Soy cotyledon fiber may optionally be utilized as a fiber source. Typically, suitable soy cotyledon fiber will generally effectively bind water when the mixture of soy protein and soy cotyledon fiber is co-extruded. In this context, "effectively bind water" generally means that the soy cotyledon fiber has a water holding capacity of at least 5.0 to about 8.0 grams of water per gram of soy cotyledon fiber, and preferably the soy cotyledon fiber has a water holding capacity of at least about 6.0 to about 8.0 grams of water per gram of soy cotyledon fiber. Soy cotyledon fiber may generally be present in the soy protein material in an amount ranging from about 1% to about 20%, preferably from about 1.5% to about 20% and most preferably, at from about 2% to about 5% by weight on a moisture free basis. Suitable soy cotyledon fiber is commercially available. For example, FIBRIM^{®} 1260 and FIBRIM^{®} 2000 are soy cotyledon fiber materials that are commercially available from Solae, LLC (St. Louis, Mo.).

### (iii) additional ingredients

A variety of additional ingredients may be added to any of the combinations of protein-containing materials above without departing from the scope of the invention. For example, antioxidants, antimicrobial agents, and combinations thereof may be included. Antioxidant additives include BHA, BHT, TBHQ, vitamins A, C and E and derivatives, and various plant-extracts such as those containing carotenoids, tocopherols or flavonoids having antioxidant properties, may be included to increase the shelf-life or nutritionally enhance the retorted fish compositions or retorted simulated fish compositions. The antioxidants and the antimicrobial agents may have a combined presence at levels of from about 0.01% to about 10%, preferably, from about 0.05% to about 5%, and more preferably from about 0.1% to about 2%, by weight of the protein-containing materials that will be extruded.

### (iv) moisture content

As will be appreciated by the skilled artisan, the moisture content of the protein-containing materials can and will vary depending upon the extrusion process. Generally speaking, the moisture content may range from about 1% to about 80% by weight. In low moisture extrusion applications, the moisture content of the protein-containing materials may range from about 1 % to about 35% by weight. Alternatively, in high moisture extrusion applications, the moisture content of the protein-containing materials may range from about 35% to about 80% by weight. In an exemplary embodiment, the extrusion application utilized to form the extrudates is low moisture. An exemplary example of a low moisture extrusion process to produce extrudates having proteins with fibers that are substantially aligned is detailed in I(b) and Example 5.

### (b) extrusion of the plant material

A suitable extrusion process for the preparation of a plant protein material comprises introducing the plant protein material and other ingredients into a mixing tank (i.e., an ingredient blender) to combine the ingredients and form a dry blended plant protein material pre-mix. The dry blended plant protein material pre-mix is then transferred to a hopper from which the dry blended ingredients are introduced along with moisture into a pre-conditioner to form a conditioned plant protein material mixture. The conditioned material is then fed to an extruder in which the plant protein material mixture is heated under mechanical pressure generated by the screws of the extruder to form a molten extrusion mass. The molten extrusion mass exits the extruder through an extrusion die.

### (i) extrusion process conditions

Among the suitable extrusion apparatuses useful in the practice of the present invention is a double barrel, twin-screw extruder as described, for example, in U.S. Pat. No. 4,600,311. Further examples of suitable commercially available extrusion apparatuses include a CLEXTRAL Model BC-72 extruder manufactured by Clextral, Inc. (Tampa, Florida); a WENGER Model TX-57 extruder, a WENGER Model TX-168 extruder, and a WENGER Model TX-52 extruder all manufactured by Wenger Manufacturing, Inc. (Sabetha, Kansas). Other conventional extruders suitable for use in this invention are described, for example, in U.S. Pat. Nos. 4,763,569, 4,118,164, and 3,117,006.

The screws of a twin-screw extruder can rotate within the barrel in the same or opposite directions. Rotation of the screws in the same direction is referred to as single flow whereas rotation of the screws in opposite directions is referred to as double flow. The speed of the screw or screws of the extruder may vary depending on the particular apparatus; however, it is typically from about 250 to about 350 revolutions per minute (rpm). Generally, as the screw speed increases, the density of the extrudate will decrease. The extrusion apparatus contains screws assembled from shafts and worm segments, as well as mixing lobe and ring-type shearlock elements as recommended by the extrusion apparatus manufacturer for extruding plant protein material.

The extrusion apparatus generally comprises a plurality of heating zones through which the protein mixture is conveyed under mechanical pressure prior to exiting the extrusion apparatus through an extrusion die. The temperature in each successive heating zone generally exceeds the temperature of the previous heating zone by between about 10°C and about 70°C. In one embodiment, the conditioned pre-mix is transferred through four heating zones within the extrusion apparatus, with the protein mixture heated to a temperature of from about 100°C to about 150°C such that the molten extrusion mass enters the extrusion die at a temperature of from about 100°C to about 150°C.

The pressure within the extruder barrel is typically at least about 400 psig (about 28 bar) and generally the pressure within the last two heating zones is from about 1000 psig to about 3000 psig (from about 70 bar to about 210 bar). The barrel pressure is dependent on numerous factors including, for example, the extruder screw speed, feed rate of the mixture to the barrel, feed rate of water to the barrel, and the viscosity of the molten mass within the barrel.

Water is injected into the extruder barrel to hydrate the plant protein material mixture and promote texturization of the proteins. As an aid in forming the molten extrusion mass, the water may act as a plasticizing agent. Water may be introduced to the extruder barrel via one or more injection jets in communication with a heating zone. Typically, the mixture in the barrel contains from about 15% to about 30% by weight water. The rate of introduction of water to any of the heating zones is generally controlled to promote production of an extrudate having desired characteristics. It has been observed that as the rate of introduction of water to the barrel decreases, the density of the extrudate decreases. Typically, less than about 1 kg of water per kg of protein is introduced to the barrel. Preferably, from about 0.1 kg to about 1 kg of water per kg of protein are introduced to the barrel.

### (ii) preconditioning

In a pre-conditioner, the plant protein material and other ingredients are preheated, contacted with moisture, and held under controlled temperature and pressure conditions to allow the moisture to penetrate and soften the individual particles. The preconditioning step increases the bulk density of the particulate fibrous material mixture and improves its flow characteristics. The preconditioner contains one or more paddles to promote uniform mixing of the protein and transfer of the protein mixture through the preconditioner. The configuration and rotational speed of the paddles vary widely, depending on the capacity of the preconditioner, the extruder throughput and/or the desired residence time of the mixture in the preconditioner or extruder barrel. Generally, the speed of the paddles is from about 500 to about 1300 revolutions per minute (rpm).

Typically, the plant protein material mixture is preconditioned prior to introduction into the extrusion apparatus by contacting the pre-mix with moisture (i.e., steam and/or water). Preferably the mixture is heated to a temperature of from about 50°C to about 80°C, more preferably from about 60°C to about 75°C in the preconditioner.

Typically, the plant protein material pre-mix is conditioned for a period of about 30 to about 60 seconds, depending on the speed and the size of the conditioner. The plant protein material pre-mix is contacted with steam and/or water and heated in the pre-conditioner at generally constant steam flow to achieve the desired temperatures. The water and/or steam conditions (i.e., hydrates) the plant protein material mixture, increases its density, and facilitates the flowability of the dried mix without interference prior to introduction to the extruder barrel where the proteins are texturized. If a low moisture plant protein material is desired, the conditioned pre-mix may contain from about 1% to about 35% (by weight) water. If a high moisture plant protein material is desired, the conditioned pre-mix may contain from about 35% to about 80% (by weight) water.

The conditioned pre-mix typically has a bulk density of from about 0.25 g/cm³ to about 0.6 g/cm³. Generally, as the bulk density of the preconditioned protein mixture increases within this range, the protein mixture is easier to process. This is presently believed to be due to such mixtures occupying all or a majority of the space between the screws of the extruder, thereby facilitating conveying the extrusion mass through the barrel.

### (iii) extrusion process

The conditioned pre-mix is then fed into an extruder to heat, shear, and ultimately plasticize the mixture. The extruder may be selected from any commercially available extruder and may be a single screw extruder or preferably a twin-screw extruder that mechanically shears the mixture with the screw elements.

The conditioned pre-mix is generally introduced to the extrusion apparatus at a rate of no more than about 25 kilograms per minute. Generally, it has been observed that the density of the extrudate decreases as the feed rate of pre-mix to the extruder increases.

The protein mixture is subjected to shear and pressure by the extruder to plasticize the mixture. The screw elements of the extruder shear the mixture as well as create pressure in the extruder by forcing the mixture forwards though the extruder and through the die. The screw motor speed determines the amount of shear and pressure applied to the mixture by the screw(s). Preferably, the screw motor speed is set to a speed of from about 200 rpm to about 500 rpm, and more preferably from about 300 rpm to about 400 rpm, which moves the mixture through the extruder at a rate of at least about 20 kilograms per hour, and more preferably at least about 40 kilograms per hour. Preferably the extruder generates an extruder barrel exit pressure of from about 500 to about 1500 psig, and more preferably an extruder barrel exit pressure of from about 600 to about 1000 psig is generated.

The extruder heats the protein mixture as it passes through the extruder denaturing the protein in the mixture. The extruder includes a means for heating the mixture to temperatures of from about 10.0°C to about 180°C. Preferably the means for heating the mixture in the extruder comprises extruder barrel jackets into which heating or cooling media such as steam or water may be introduced to control the temperature of the mixture passing through the extruder. The extruder may also include steam injection ports for directly injecting steam into the mixture within the extruder. The extruder preferably includes multiple heating zones that can be controlled to independent temperatures, where the temperatures of the heating zones are preferably set to increase the temperature of the mixture as it proceeds through the extruder. For example, the extruder may be set in a four temperature zone arrangement, where the first zone (adjacent the extruder inlet port) is set to a temperature of from about 80°C to about 100°C, the second zone is set to a temperature of from about 100°C to 135°C, the third zone is set to a temperature of from 135°C to about 150°C, and the fourth zone (adjacent the extruder exit port) is set to a temperature of from 150°C to 180°C. The extruder may be set in other temperature zone arrangements, as desired. For example, the extruder may be set in a five temperature zone arrangement, where the first zone is set to a temperature of about 25°C, the second zone is set to a temperature of about 50°C, the third zone is set to a temperature of about 95°C, the fourth zone is set to a temperature of about 130°C, and the fifth zone is set to a temperature of about 150°C.

The mixture forms a melted plasticized mass in the extruder. A die assembly is attached to the extruder in an arrangement that permits the plasticized mixture to flow from the extruder exit port into the die assembly, wherein the die assembly consists of a die and a backplate. The backplate is attached to the inner face of the die for the purpose of directing the flow of material entering the die towards the die aperture(s). Additionally, the die assembly produces substantial alignment of the protein fibers within the plasticized mixture as it flows through the die assembly. The backplate in combination with the die create a central chamber that receives the melted plasticized mass from the extruder through a central opening. From the central chamber, the melted plasticized mass is directed by flow directors into at least one elongated tapered channel. Each elongated tapered channel leads directly to an individual die aperture. The extrudate exits the die through at least one aperture in the periphery or side of the die assembly at which point the protein fibers contained within are substantially aligned. It is also contemplated that the extrudate may exit the die assembly through at least one aperture in the die face, which may be a die plate affixed to the die.

The width and height dimensions of the die aperture(s) are selected and set prior to extrusion of the mixture to provide the fibrous material extrudate with the desired dimensions. The width of the die aperture(s) may be set so that the extrudate resembles from a cubic chunk of meat to a steak filet, where widening the width of the die aperture(s) decreases the cubic chunk-like nature of the extrudate and increases the filet-like nature of the extrudate. Preferably the width of the die aperture(s) is/are set to a width of from about 10 millimeters to about 40 millimeters.

The height dimension of the die aperture(s) may be set to provide the desired thickness of the extrudate. The height of the aperture(s) may be set to provide a very thin extrudate or a thick extrudate. Preferably, the height of the die aperture(s) may be set to from about 1 millimeter to about 30 millimeters, and more preferably from about 8 millimeters to about 16 millimeters.

It is also contemplated that the die aperture(s) may be round. The diameter of the die aperture(s) may be set to provide the desired thickness of the extrudate. The diameter of the aperture(s) may be set to provide a very thin extrudate or a thick extrudate. Preferably, the diameter of the die aperture(s) may be set to from about 1 millimeter to about 30 millimeters, and more preferably from about 8 millimeters to about 16 millimeters.

The extrudate is cut after exiting the die assembly. Suitable apparatuses for cutting the extrudate include flexible knives manufactured by Wenger Manufacturing, Inc. (Sabetha, Kansas) and Clextral, Inc. (Tampa, Florida).

The dryer, if one is used, generally comprises a plurality of drying zones in which the air temperature may vary. Generally, the temperature of the air within one or more of the zones will be from about 135°C to about 185°C. Typically, the extrudate is present in the dryer for a time sufficient to provide an extrudate having a desired moisture content. Generally, the extrudate is dried for at least about 5 minutes and more generally, for at least about 10 minutes. Suitable dryers include those manufactured by Wolverine Proctor & Schwartz (Merrimac, Mass.), National Drying Machinery Co. (Philadelphia, Pa.), Wenger (Sabetha, Kans.), Clextral (Tampa, Fla.), and Buehler (Lake Bluff, III.).

The desired moisture content may vary widely depending on the intended application of the extrudate. Generally speaking, the extruded material has a moisture content of from about 6% to about 13% by weight, if dried, and needs to be hydrated in water until the water is absorbed and the fibers are separated. If the protein material is not dried or not fully dried, its moisture content is higher, generally from about 16% to about 30% by weight.

The dried extrudate may further be comminuted to reduce the average particle size of the extrudate. Suitable grinding apparatus include hammer mills such as Mikro Hammer Mills manufactured by Hosokawa Micron Ltd. (England).

### (c) characterization of the structured plant protein products

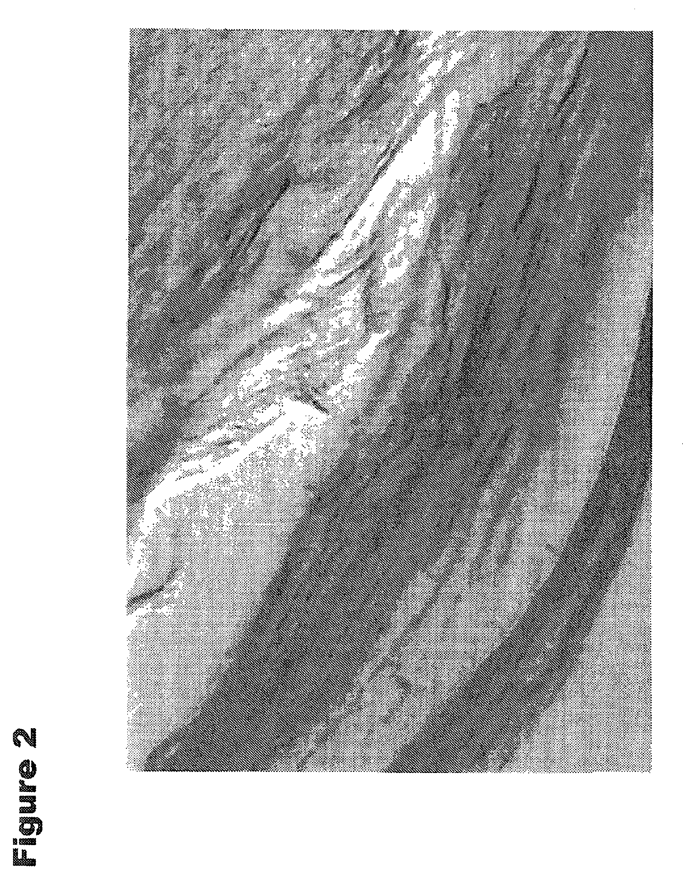

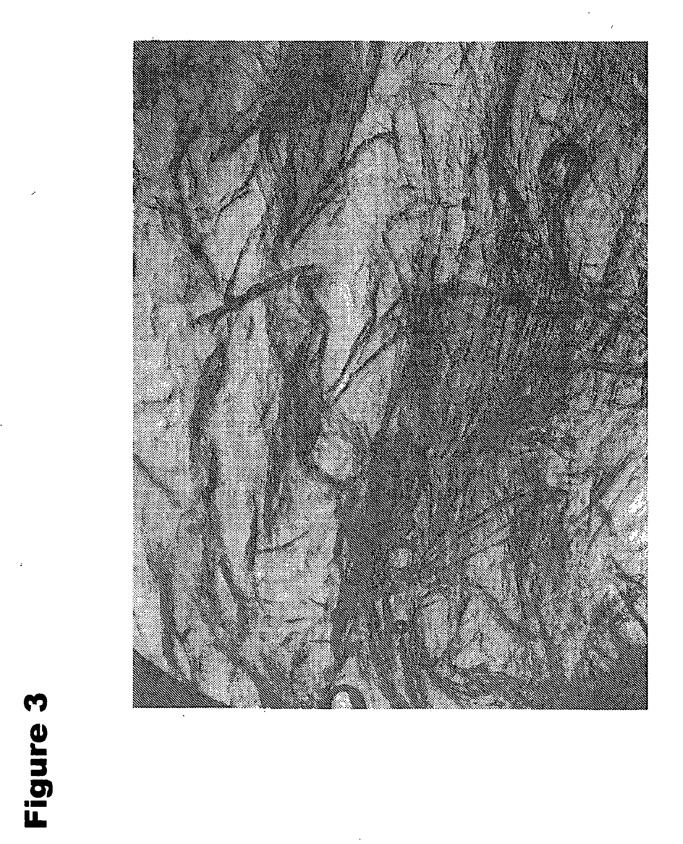

The extrudates produced in I(b) comprise the structured plant protein products comprising protein fibers that are substantially aligned. In the context of this invention "substantially aligned" generally refers to the arrangement of protein fibers such that a significantly high percentage of the protein fibers forming the structured plant protein product are contiguous to each other at less than a 45° angle when viewed in a horizontal plane. An average of at least 55% of the protein fibers comprising the structured plant protein product are substantially aligned. In another embodiment, an average of at least 60% of the protein fibers comprising the structured plant protein product are substantially aligned. In a further embodiment, an average of at least 70% of the protein fibers comprising the structured plant protein product are substantially aligned. In an additional embodiment, an average of at least 80% of the protein fibers comprising the structured plant protein product are substantially aligned. In yet another embodiment, an average of at least 90% of the protein fibers comprising the structured plant protein product are substantially aligned. Methods for determining the degree of protein fiber alignment are known in the art and include visual determinations based upon micrographic images. By way of example, **Figures 2** and **3** depict micrographic images that illustrate the difference between a structured plant protein product having substantially aligned protein fibers compared to a plant protein product having protein fibers that are significantly crosshatched. **Figure 2** depicts a structured plant protein product prepared according to I (a)-I (b) having protein fibers that are substantially aligned. Contrastingly, **Figure 3** depicts a plant protein product containing protein fibers that are significantly crosshatched and not substantially aligned. Because the protein fibers are substantially aligned, as shown in **Figure 2**, the structured plant protein products utilized in the invention generally have the texture and consistency of cooked muscle meat. In contrast, extrudates having protein fibers that are randomly oriented or crosshatched generally have a texture that is soft or spongy.

In addition to having protein fibers that are substantially aligned, the structured plant protein products also typically have shear strength substantially similar to whole meat muscle. In this context of the invention, the term "shear strength" provides one means to quantify the formation of a sufficient fibrous network to impart whole-muscle like texture and appearance to the plant protein product. Shear strength is the maximum force in grams needed to puncture through a given sample. A method for measuring shear strength is described in Example 3. The structured plant protein products of the invention will have average shear strength of at least 2000 grams. In a further embodiment, the structured plant protein products will have average shear strength of from about 2000 to about 2600 grams. In an additional embodiment, the structured plant protein products will have average shear strength of at least 2200 grams. In a further embodiment, the structured plant protein products will have average shear strength of at least 2300 grams. In yet another embodiment, the structured plant protein products will have average shear strength of at least 2400 grams. In still another embodiment, the structured plant protein products will have average shear strength of at least 2500 grams. In a further embodiment, the structured plant protein products will have average shear strength of at least 2600 grams.

A means to quantify the size of the protein fibers formed in the structured plant protein products may be done by a shred characterization test. Shred characterization is a test that generally determines the percentage of large pieces formed in the structured plant protein product. In an indirect manner, percentage of shred characterization provides an additional means to quantify the degree of protein fiber alignment in a structured plant protein product. Generally speaking, as the percentage of large pieces increases, the degree of protein fibers that are aligned within a structured plant protein product also typically increases. Conversely, as the percentage of large pieces decreases, the degree of protein fibers that are aligned within a structured plant protein product also typically decreases. A method for determining shred characterization is detailed in Example 4. The structured plant protein products of the invention have an average shred characterization of at least 17% by weight of large pieces. In a further embodiment the structured plant protein products have an average shred characterization of from about 20% to about 25% by weight of large pieces. In another embodiment, the average shred characterization is at least 20% by weight, at least 21 % by weight, at least 22% by weight, at least 23% by weight, at least 24% by weight, at least 25% by weight, or at least 26% by weight large pieces.

The structured plant protein products will have protein fibers that are at least 55% aligned, have average shear strength of at least 2000 grams, and have an average shred characterization of at least 17% by weight large pieces. In another exemplary embodiment, the structured plant protein products will have protein fibers that are at least 55% aligned, have average shear strength of at least 2200 grams, and have an average shred characterization of at least 20% by weight large pieces.

### (II) Fish Meat

The retorted fish compositions, in addition to structured plant protein products, also comprise fish meat. Generally speaking, the fish meat may be obtained from a variety of fish species suitable for human consumption. Suitable examples of fish species include amberjack, anchovies, bluefish, bonito, buffalofish, burbot, butterfish, carp, catfish, crevalle jack, cobia, cod, croaker, cusk, eel, grouper, flounder (arrowtooth, southern, starry, summer, winter, witch, yellowtail), haddock, jewfish, kingfish, lake chub, lake herring, lake sturgeon, lake whitefish, lingcod, mackerel, mahi mahi, monkfish, mullet, northern pike, orange roughy, Pacific sand dab, perch, pollock, pompano, rockfish, sable, salmon, sauger, sculp, sea bass (black, giant, white), sea dab, shark, sheepshead, smelt, snapper (red, mangrove, vermillion, yellowtail), snook, sole (Dover, English, Petrale, Rex, rock), spot, spotted cabrilla, striped bass, swordfish, tautog, tilefish, turbot, trout (brook, lake, rainbow, sea, white sea), tuna, walleye, white crappie, whiting, and wolfish.

The most common tuna species used for retort cooking (canning) include the "light meat" species such as skipjack *(Katsuwonus pelamis),* yellowfin *(Thunnus albacares),* and bonito, a tuna-like fish of the genus *Sarda,* as well as the "white meat" species such as albacore *(Thunnus alalunga)* and tongol *(Thunnus tonggol).* Less commonly used tuna species include blackfin *(Thunnus atlanticus),* big eye *(Thunnus obesus),* Southern bluefin *(Thunnus maccoyii),* Atlantic bluefin *(Thunnus thynnus),* mackerel tuna *(Euthynnus affinis),* little tunny *(Euthynnus alleteratus),* and black skipjack *(Euthynnus lineatus).* Salmon species used for canning include the Atlantic salmon *(Salmo salar)* and the following Pacific species: sockey or red salmon *(Oncorhynchus nerka),* pink salmon *(Oncorhynchus gorbuscha),* chum salmon *(Oncorhynchus keta),* chinook salmon *(Oncorhynchus tshawytscha),* coho or silver salmon *(Oncorhynchus kisutch),* and cherry salmon *(Oncorhynchus masu).* Mackerel species suitable for use include Spanish mackerel, atlantic mackerel, and king mackerel.

The fish meat is typically pre-cooked to partially dehydrate the flesh and prevent the release of those fluids during the retorting process, to remove natural oils that may have strong flavors, to coagulate the fish protein and loosen the meat from the skeleton, or to develop desirable and textural flavor properties. The pre-cooking process may be carried out in steam, water, oil, hot air, smoke, or a combination thereof. The fish meat is generally heated until the internal temperature is between 60°C and 85°C. The fish meat may be allowed to cool, after which the skin and the bones are removed to separate the loins. The loins are then cut into chunks, flakes, or shreds, as described in III(b) below.

### (III) Process for Producing Retorted Fish Products and Retorted Simulated Fish Products

Another aspect of the invention provides a process for producing retorted fish compositions. A retorted fish composition may comprise a mixture of fish meat and structured plant protein product, or it may comprise structured plant protein product. The process comprises coloring and hydrating the structured plant protein product, reducing its particle size, optionally mixing it with fish meat, and retort cooking the mixture to produce a retorted fish composition.

### (a) coloring system

The structured plant protein product generally will be colored to resemble the color of the fish flesh it will simulate in the retorted fish compositions. Generally, the structured plant protein product will be colored to resemble retorted fish meat. The composition of the structured plant protein product was described above in I(a).

The structured plant protein product may be colored with a natural colorant, a combination of natural colorants, an artificial colorant, a combination of artificial colorants, or a combination of natural and artificial colorants. Suitable examples of natural colorants include annatto (reddish-orange), anthocyanins (red, purple, blue), lycopene, beta-carotene (yellow to orange), beta-APO 8 carotenal (orange to red), black currant, burnt sugar; canthaxanthin (orange), caramel, carmine/carminic acid (magenta, pink, red), carrot, cochineal extract (magenta, pink, red), curcumin (yellow-orange); lac red, lutein (yellow); monascus red, paprika, red cabbage juice, redfruit, riboflavin (yellow-orange), saffron, titanium dioxide (white), and turmeric (yellow-orange). Examples of FDA-approved artificial colorants include FD&C (Food Drug & Cosmetics) Red No. 3 (Erythrosine), Red No. 40 (Allura Red AC), Yellow No. 5 (Tartrazine), and Yellow No. 6 (Sunset Yellow). Food colorants may be dyes, which are powders, granules, or liquids that are soluble in water. Alternatively, natural and artificial food colorants may be lake colors, which are combinations of dyes and insoluble materials. Lake colors are not oil soluble, but are oil dispersible; they tint by dispersion. A preferred colorant is a combination of cochineal extract, alum, and an organic acid or an organic salt, or a combination of an organic acid and an organic salt. The organic acids comprise tartaric acid, citric acid, ascorbic acid, and combinations thereof. The organic salts comprise a sodium salt of tartaric acid, a sodium salt of citric acid, a sodium salt of ascorbic acid, and combinations thereof.

The type of colorant or colorants and the concentration of the colorant or colorants will be adjusted to match the color of the retorted fish meat to be simulated. The final concentration of a natural food colorant in a retorted fish composition may range from about 0.01% percent to about 4% by weight. The final concentration of a natural food colorant may range from about 0.03% to about 2% by weight. The final concentration of a natural food colorant may range from about 0.1 % to about 1% by weight. The final concentration of an artificial food colorant in a retorted fish composition may range from about 0.000001% to about 0.2% by weight. The final concentration of an artificial colorant may range from about 0.00001% to about 0.02% by weight. The final concentration of an artificial colorant may range from about 0.0001% to about 0.002% by weight.

During the coloring process, the structured plant protein product will be mixed with water to rehydrate the structured plant protein product. The amount of water added to the plant protein product can and will vary. The ratio of water to structured plant protein product may range from about 1.5:1 to about 4:1. In a preferred embodiment, the ratio of water to structured plant protein product may be about 2.5:1,

The color system may further comprise an acidity regulator to maintain the pH in the optimal range for the colorant. The acidity regulator may be an acidulent. Examples of acidulents that may be added to food include citric acid, acetic acid (vinegar), tartaric acid, gluconodelta lactone, gluconic acid, malic acid, fumaric acid, lactic acid, phosphoric acid, sorbic acid, and benzoic acid. The final concentration of the acidulent in a retorted fish composition may range from about 0.001% to about 5% by weight. The final concentration of the acidulent may range from about 0.01% to about 2% by weight. The final concentration of the acidulent may range from about 0.1% to about 1% by weight. The acidity regulator may also be a pH-raising agent, such as alkaline phosphate and sodium carbonate. Buffer solutions can also be used to adjust the pH.

### (b) particle size reduction

The hydrated, colored structured plant protein product will generally be cut or processed into smaller sized particles. The structured plant protein product may be cut into chunks, which have dimensions of not less than 1.2 cm in each direction and in which the original substantially aligned protein fibers are retained. The particles may be flakes, which have dimensions less than 1.2 cm in each direction but in which the aligned protein fibers are essentially retained. The structured plant protein product may also be, chopped, ground or shredded, in which discrete particles of uniform size are produced.

### (c) optionally blend with fish meat

The hydrated, colored structured plant protein product of reduced particle size may be blended with fish meat to produce a retorted fish composition. In general, the structured plant protein produce will be blended with fish meat that has a similar particle size. Typically, the amount of structured plant protein product in relation to the amount of fish meat in the retorted fish compositions can and will vary depending upon the composition's intended use. By way of example, when a relatively small degree of fish flavor is desired, the concentration of fish meat in the retorted fish composition may be 45%, 40%, 35%, 30%, 25%, 20%, 15%, 10%, 5%, or 1 %, by weight. Alternatively, when a fish composition having a relatively high degree of fish flavor or fish meat is desired, the concentration of fish meat in the retorted fish composition may be 50%, 55%, 60%, 65%, 70%, or 75% by weight. Consequently, the concentration of hydrated structured plant protein product in the retorted fish composition may be 25%, 30%, 35%, 40%, 45%, 50%, 55%, 60%, 65%, 70%, 75%, 80%, 85%, 90%, 95%, or 99% by weight.

### (d) addition of nutrients

The simulated fish compositions or the blended fish compositions will generally be packed into canning containers along with water, spring water, brine, vegetable broth, lemon broth, olive oil, vegetable oil, or a sauce. The sauce may be tomato, mustard, teriyaki, or curry sauce.

The fish compositions may further comprise an antioxidant. The antioxidant may prevent the oxidation of the polyunsaturated fatty acids (e.g., omega-3 fatty acids) in the fish meat, and the antioxidant may also prevent oxidative color changes in the colored plant protein product and the fish meat. The antioxidant may be natural or synthetic. Suitable antioxidants include, but are not limited to, ascorbic acid and its salts, ascorbyl palmitate, ascorbyl stearate, anoxomer, N-acetylcysteine, benzyl isothiocyanate, o-, m- or p-amino benzoic acid (o is anthranilic acid, p is PABA), butylated hydroxyanisole (BHA), butylated hydroxytoluene (BHT), caffeic acid, canthaxantin, alpha-carotene, beta-carotene, beta-caraotene, beta-apo-carotenoic acid, carnosol, carvacrol, catechins, cetyl gallate, chlorogenic acid, clove extract, coffee bean extract, p-coumaric acid, 3,4-dihydroxybenzoic acid, N,N'-diphenyl-p-phenylenediamine (DPPD), dilauryl thiodipropionate, distearyl thiodipropionate, 2,6-di-tertbutylphenol, dodecyl gallate, edetic acid, ellagic acid, erythorbic acid, sodium erythorbate, esculetin, esculin, 6-ethoxy-1,2-dihydro-2,2,4-trimethylquinoline, ethyl gallate, ethyl maltol, ethylenediaminetetraacetic acid (EDTA), eucalyptus extract, eugenol, ferulic acid, flavonoids, flavones (e.g., apigenin, chrysin, luteolin), flavonols (e.g., datiscetin, myricetin, daemfero), flavanones, fraxetin, fumaric acid, gallic acid, gentian extract, gluconic acid, glycine, gum guaiacum, hesperetin, alpha-hydroxybenzyl phosphinic acid, hydroxycinammic acid, hydroxyglutaric acid, hydroquinone, N-hydroxysuccinic acid, hydroxytryrosol, hydroxyurea, ice bran extract, lactic acid and its salts, lecithin, lecithin citrate; R-alpha-lipoic acid, lutein, lycopene, malic acid, maltol, 5-methoxy tryptamine, methyl gallate, monoglyceride citrate; monoisopropyl citrate; morin, beta-naphthoflavone, nordihydroguaiaretic acid (NDGA), octyl gallate, oxalic acid, palmityl citrate, phenothiazine, phosphatidylcholine, phosphoric acid, phosphates, phytic acid, phytylubichromel, pimento extract, propyl gallate, polyphosphates, quercetin, trans-resveratrol, rosemary extract, rosmarinic acid, sage extract, sesamol, silymarin, sinapic acid, succinic acid, stearyl citrate, syringic acid, tartaric acid, thymol, tocopherols (i.e., alpha-, beta-, gamma- and delta-tocopherol), tocotrienols (i.e., alpha-, beta-, gamma- and delta-tocotrienols), tyrosol, vanilic acid, 2,6-di-tert-butyl-4-hydroxymethylphenol (i.e., lonox 100), 2,4-(tris-3',5'-bi-tert-butyl-4'-hydroxybenzyl)-mesitylene (i.e., lonox 330), 2,4,5-trihydroxybutyrophenone, ubiquinone, tertiary butyl hydroquinone (TBHQ), thiodipropionic acid, trihydroxy butyrophenone, tryptamine, tyramine, uric acid, vitamin K and derivates, vitamin Q10, wheat germ oil, zeaxanthin, or combinations thereof. The concentration of an antioxidant in a fish composition may range from about 0.0001% to about 20% by weight. The concentration of an antioxidant in a fish composition may range from about 0.001% to about 5% by weight. The concentration of an antioxidant in a fish composition may range from about 0.01% to about 1 %.

The fish compositions may further comprise a chelating agent to stabilize the color. Suitable examples of chelating agents approved for use in food include ethylenediaminetetraacetic acid (EDTA), citric acid, gluconic acid, and phosphoric acid.

The fish compositions may further comprise a flavoring agent such as tuna flavor, tuna oil, salmon flavor, salmon oil, spice extracts, spice oils, natural smoke solutions, natural smoke extracts, yeast extract, and shiitake extract. Additional flavoring agents may include onion flavor, garlic flavor, or herb flavors. The retorted fish composition may further comprise a flavor enhancer. Examples of flavor enhancers that may be used include salt (sodium chloride), glutamic acid salts (e.g., monosodium glutamate), glycine salts, guanylic acid salts, inosinic acid salts, 5'-ribonucleotide salts, hydrolyzed proteins, and hydrolyzed vegetable proteins.

The fish compositions may further comprise a thickening or a gelling agent, such as alginic acid and its salts, agar, carrageenan and its salts, processed *Eucheuma* seaweed, gums (carob bean, guar, tragacanth, and xanthan), pectins, sodium carboxymethylcellulose, and modified starches.

The fish compositions may further comprise a nutrient such as a vitamin, a mineral, an antioxidant, an omega-3 fatty acid, or an herb. Suitable vitamins include Vitamins A, C, and E, which are also antioxidants, and Vitamins B and D. Examples of minerals that may be added include the salts of aluminum, ammonium, calcium, magnesium, and potassium. Suitable omega-3 fatty acids include docosahexaenoic acid (DHA) and Eicosapentaenoic acid (EPA). Herbs that may be added include basil, celery leaves, chervil, chives, cilantro, parsley, oregano, tarragon, and thyme.

### (e) retort cooking

The canning container, which may be a metal can, a glass container, or laminated system, containing the fish composition will be hermetically sealed. The can may be tin or aluminum. The laminated system may be a pouch made of plastic and/or plastic and foil. The container is generally sealed under a vacuum, which may be achieved by mechanical evacuation of the container headspace just prior to sealing, or by flushing superheated steam across the top of the container immediately before sealing.

The sealed container will be placed in a retort cooker for sterilization. The temperature and duration of the retorting process depends upon the container size, pack weight, filling temperature, and the pack style. An experienced fish canner will be familiar with the appropriate retorting conditions for the different fish compositions. Typical retorting conditions for a 66 mm x 40 mm can of tuna are 65 minutes at 115.6 °C or 40 minutes at 121.1°C, and conditions for a 84 mm x 46.5 mm can of tuna are 75 minutes at 115.6°C or 55 minutes at 121.1 °C.

### (IV) Products Containing the Retorted Fish Compositions and Simulated Fish Compositions

The retorted fish compositions and retorted simulated fish compositions may be combined with additional ingredients to make a variety of seasoned fish products. As an example, a tuna salad product may be produced according to the following formula:

| **TUNA SALAD** | |
|---|---|
| Hydrated plant protein product | 10-43% |
| Steamed tuna | 0-33% |
| Retort stable Mayonnaise | 20 - 40% |
| Onions, chopped | 7 - 15% |
| Water chestnuts, chopped | 7% |
| DHA | |
| Calcium carbonate | |
| Vitamin E | |
| Total | 100% |

A curry flavored tuna product may be produced using the following formula :

| **CURRY FLAVORED TUNA PRODUCT** | |
|---|---|
| Hydrated plant protein product | 15-30% |
| Steamed tuna | 35-50% |
| Onions, chopped | 5% |
| Curry sauce | 30% |
| DHA | |
| Vitamin A | |
| Vitamin C | |
| Total | 100% |

### DEFINITIONS

The term "extrudate" as used herein refers to the product of extrusion. In this context, the structured plant protein products comprising protein fibers that are substantially aligned may be extrudates in some embodiments.

The term "fiber" as used herein refers to a structured plant protein product having a size of approximately 4 centimeters in length and 0.2 centimeters in width after the shred characterization test detailed in Example 4 is performed. Fibers generally form Group 1 in the shred characterization test. In this context, the term "fiber" does not include the nutrient class of fibers, such as soybean cotyledon fibers, and also does not refer to the structural formation of substantially aligned protein fibers comprising the plant protein products.

The term "fish meat" as used herein refers to the flesh, whole meat muscle, or parts thereof derived from a fish.

The term "gluten" as used herein refers to a protein fraction in cereal grain flour, such as wheat, that possesses a high content of protein as well as unique structural and adhesive properties.

The term "gluten free starch" as used herein refers to modified tapioca starch. Gluten free or substantially gluten free starches are made from wheat, corn, and tapioca based starches. They are gluten free because they do not contain the gluten from wheat, oats, rye or barley.

The term "large piece" as used herein is the manner in which a structured plant protein product's shred percentage is characterized. The determination of shred characterization is detailed in Example 4.

The term "protein fiber" as used herein refers the individual continuous filaments or discrete elongated pieces of varying lengths that together define the structure of the plant protein products of the invention. Additionally, because the plant protein products of the invention have protein fibers that are substantially aligned, the arrangement of the protein fibers impart the texture of whole meat muscle to the plant protein products.

The term "simulated" as used herein refers to a fish composition that contains no fish meat.

The term "soy cotyledon fiber" as used herein refers to the polysaccharide portion of soy cotyledons containing at least about 70% dietary fiber. Soy cotyledon fiber typically contains some minor amounts of soy protein, but may also be 100% fiber. Soy cotyledon fiber, as used herein, does not refer to, or include, soy hull fiber. Generally, soy cotyledon fiber is formed from soybeans by removing the hull and germ of the soybean, flaking or grinding the cotyledon and removing oil from the flaked or ground cotyledon, and separating the soy cotyledon fiber from the soy material and carbohydrates of the cotyledon.

The term "soy protein concentrate" as used herein is a soy material having a protein content of from about 65% to less than about 90% soy protein on a moisture-free basis. Soy protein concentrate also contains soy cotyledon fiber, typically from about 3.5% up to about 20% soy cotyledon fiber by weight on a moisture-free basis. A soy protein concentrate is formed from soybeans by removing the hull and germ of the soybean, flaking or grinding the cotyledon and removing oil from the flaked or ground cotyledon, and separating the soy protein and soy cotyledon fiber from the soluble carbohydrates of the cotyledon.

The term "soy flour" as used herein, refers to a comminuted form of defatted soybean material, preferably containing less than about 1% oil, formed of particles having a size such that the particles can pass through a No. 100 mesh (U.S. Standard) screen. The soy cake, chips, flakes, meal, or mixture of the materials are comminuted into a soy flour using conventional soy grinding processes. Soy flour has a soy protein content of about 49% to about 65% on a moisture free basis. Preferably the flour is very finely ground, most preferably so that less than about 1% of the flour is retained on a 300 mesh (U.S. Standard) screen.

The term "soy protein isolate" as used herein is a soy material having a protein content of at least about 90% soy protein on a moisture free basis. A soy protein isolate is formed from soybeans by removing the hull and germ of the soybean from the cotyledon, flaking or grinding the cotyledon and removing oil from the flaked or ground cotyledon, separating the soy protein and carbohydrates of the cotyledon from the cotyledon fiber, and subsequently separating the soy protein from the carbohydrates.

The term "strand" as used herein refers to a structured plant protein product having a size of approximately 2.5 to about 4 centimeters in length and greater than approximately 0.2 centimeter in width after the shred characterization test detailed in Example 4 is performed. Strands generally form Group 2 in the shred characterization test.

The term "starch" as used herein refers to starches derived from any native source. Typically sources for starch are cereals, tubers, roots, legumes, and fruits.

The term "wheat flour" as used herein refers to flour obtained from the milling of wheat. Generally speaking, the particle size of wheat flour is from about 14 to about 120 µm.

### EXAMPLES

Examples 1-5 illustrate various embodiments of the invention.

### Example 1. Soy Protein Product with Natural Colorant

A preparation of color from fermented red rice, i.e., rice cultured with the red mold *Monascus purpureus,* was used to color a soy protein product of the invention to resemble tuna flesh. The monascus colorant (AVO-Werke August Beisse, Belm, Germany) was dispersed in water. A soy protein product (SUPRO^{®}MAX 5050, Solae, St. Louis, MO) was combined with the color solution (see Table 1) in a plastic pouch and vacuum-sealed. The package was allowed to stand for 1 hour. The bag was opened and the soy protein product was flaked using a Comitrol® Processor (Urschel Laboratories, Inc., Valparaiso, IN). SUPRO^{®}MAX 50/50 is a plant protein product formulation of the invention comprising plant protein derived from soy beans and wheat.

**Table 1. Formula to prepare and color protein product**

| | Amount |
|---|---|
| SUPRO^{®}MAX 5050 | 1000 g |
| Water | 2500 g |
| Monascus colorant | 35 g |
| Total | 3535 g |

Yellowfin tuna loin was steam-cooked to an internal temperature of 60°C. The cooked tuna was chilled and flaked. The cooked tuna and the hydrated/colored soy protein product were blended in a 3:1 ratio and packed into cans. Control cans were prepared without structured plant protein product. The ingredients in each (6.5 oz) 184,27 g can are presented in Table 2. The cans were retorted at 116,7°C (242°F) for 75 minutes in a retort cooker.

**Table 2. Contents of cans**

| Sample | Control | Test |
|---|---|---|
| Cooked tuna, flaked | 100 g | 75 g |
| Hydrated SUPROMAX^{®}5050 colored with natural color and flaked | | 25 g |
| Vegetable broth | 69.2 g | 69.2 g |
| Salt | 0.8 g | 0.8 g |
| Total | 170 g | 170 g |

The cans were opened and evaluated. The color, appearance, flavor, and texture of the test tuna/soy protein product blend were comparable to those of the control sample.

### Example 2. Soy Protein Product with Artificial Colorant

Red Color No. 40 and Yellow Color No. 5 were used to color soy protein product so that it resembled tuna flesh. The protein product, water, and color solutions were combined in a plastic pouch according to Table 3, and the pouch was vacuum-sealed.

**Table 3. Formula to prepare and color soy protein product**

| | Amount |
|---|---|
| SUPRO^{®}MAX5050 | 200 g |
| Water | 452g |
| Red color No. 40, 0.05% solution | 40 g |
| Yellow color, No. 5, 0.02% solution | 8 g |
| Total | 700 q |

After 1 hour at room temperature, the pouch was opened and the soy protein product was chopped as in Example 1 Tuna was cooked and flaked essentially as described in Example 1. The ingredients were packed into cans using the amounts listed in Table 4. The cans were retorted at 116.7°C (242°F) for 75 minutes in a retort cooker.

**Table 4. Contents of cans**

| Sample | Control | Test |
|---|---|---|
| Cooked tuna, flaked | 100 g | 75 g |
| Hydrated/colored protein product - Artificial | | 25 g |
| Vegetable broth | 69.2 g | 69.2 g |
| Salt | 0.8 g | 0.8 g |
| Total | 170 g | 170 g |

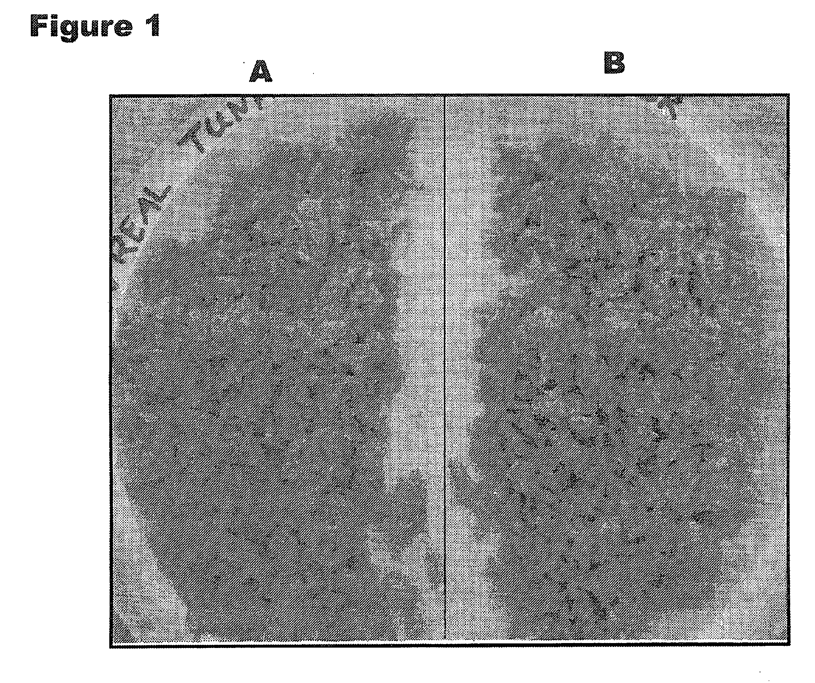

The control and test samples were evaluated. The color, appearance, and flavor were comparable between the control tuna and the tuna/soy protein product-artificial colored blend. The tuna/soy protein product blend was also very similar in color and appearance to a commercial product, as shown in Table 5 and Figure 1.

**Table 5. Color values**

| | L-value | a-value | b-value |
|---|---|---|---|
| A commercial canned Tuna | 62.47 | 7,74 | 18.05 |
| Artificial colored soy protein product/tuna blend | 64.42 | 7.67 | 19.66 |

### Example 3. Determination of Shear Strength

Shear strength of a sample is measured in grams and may be determined by the following procedure. Weigh a sample of the colored structured plant protein product and place it in a heat sealable pouch and hydrate the sample with approximately three times the sample weight of room temperature tap water. Evacuate the pouch to a pressure of about 0.01 Bar and seal the pouch. Permit the sample to hydrate for about 12 to about 24 hours. Remove the hydrated sample and place it on the texture analyzer base plate oriented so that a knife from the texture analyzer will cut through the diameter of the sample. Further, the sample should be oriented under the texture analyzer knife such that the knife cuts perpendicular to the long axis of the textured piece. A suitable knife used to cut the extrudate is a model TA-45, incisor blade manufactured by Texture Technologies (USA). A suitable texture analyzer to perform this test is a model TA, TXT2 manufactured by Stable Micro Systems Ltd. (England) equipped with a 25, 50, or 100 kilogram load. Within the context of this test, shear strength is the maximum force in grams needed to puncture through the sample.

### Example 4. Determination of Shred Characterization

A procedure for determining shred characterization may be performed as follows. Weigh about 150 grams of a tructured plant protein product using whole pieces only. Place the sample into a heat-sealable plastic bag and add about 450 grams of water at 25°C. Vacuum seal the bag at about 150 mm Hg and allow the contents to hydrate for about 60 minutes. Place the hydrated sample in the bowl of a Kitchen Aid mixer model KM14G0 equipped with a single blade paddle and mix the contents at 130 rpm for two minutes. Scrape the paddle and the sides of the bowl, returning the scrapings to the bottom of the bowl. Repeat the mixing and scraping two times. Remove -200g of the mixture from the bowl. Separate the ~200g of mixture into one of two groups. Group 1 is the portion of the sample having fibers at least 4 centimeters in length and at least 0.2 centimeters wide. Group 2 is the portion of the sample having strands between 2.5 cm and 4.0 cm long, and which are ≥ 0.2 cm wide. Weigh each group, and record the weight. Add the weight of each group together, and divide by the starting weight (e.g. ~200g). This determines the percentage of large pieces in the sample. If the resulting value is below 15%, or above 20%, the test is complete. If the value is between 15% and 20%, then weigh out another ~200g from the bowl, separate the mixture into groups one and two, and perform the calculations again.

### Example 5. Production of Structured Plant Protein Products

The following extrusion process may be used to prepare the structured plant protein products of the invention, such as the soy structured plant protein products utilized in Examples 1 and 2. Added to a dry blend mixing tank are the following: 1000 kilograms (kg) Supro 620 (soy isolate), 440 kg wheat gluten, 171 kg wheat starch, 34 kg soy cotyledon fiber, 9 kg dicalcium phosphate, and 1 kg L-cysteine. The contents are mixed to form a dry blended soy protein mixture. The dry blend is then transferred to a hopper from which the dry blend is introduced into a preconditioner along with 480 kg of water to form a conditioned soy protein pre-mixture. The conditioned soy protein pre-mixture is then fed to a twin-screw extrusion apparatus at a rate of not more than 25 kg/minute. The extrusion apparatus comprises five temperature control zones, with the protein mixture being controlled to a temperature of from about 25°C in the first zone, about 50°C in the second zone, about 95°C in the third zone, about 130°C in the fourth zone, and about 150°C in the fifth zone. The extrusion mass is subjected to a pressure of at least about 2758 kPa (400 psig) in the first zone up to about 10342 kPa (1500 psig) in the fifth zone. Water, 60 kg, is injected into the extruder barrel, via one or more injection jets in communication with a heating zone. The molten extruder mass exits the extruder barrel through a die assembly consisting of a die and a backplate. As the mass flows through the die assembly the protein fibers contained within are substantially aligned with one another forming a fibrous extrudate. As the fibrous extrudate exits the die assembly, it is cut with flexible knives and the cut mass is then dried to a moisture content of about 10% by weight.

## Claims

1. A retorted fish composition, the fish composition comprising:
(a) a structured plant protein product comprising protein fibers; and
(b) fish meat;
**characterized in that** at least 55% of the protein fibers comprising the structured plant protein product are contiguous to each other at less than a 45° angle when viewed in a horizontal plane and the structured plant protein product has an average shear strength of at least 2000 grams and an average shred characterization of at least 17% by weight of large pieces.

2. The retorted fish composition of claim 1, wherein the fish meat is selected from the group consisting of tuna, mackerel, and salmon.

3. The retorted fish composition of claim 1 or 2, wherein the structured plant protein product is derived from a plant selected from the group consisting of legumes, soybeans, wheat, oats, corn, peas, canola, sunflowers, rice, amaranth, lupin, rape seed, and mixtures thereof; and/or comprises soy protein and wheat protein.

4. The retorted fish composition of one of claims 1 to 3, wherein the concentration of hydrated structured plant protein product present in the retorted fish composition ranges from 5% to 99% by weight and the concentration of fish meat present in the retorted fish composition ranges from 1% to 95% by weight.

5. The retorted fish composition of one of claims 1 to 4, further comprising an ingredient selected from the group consisting of a vitamin, a mineral, an antioxidant, an omega-3 fatty acid, and a herb; or wherein the retorted fish composition is combined with additional ingredients to produce a seasoned fish product.

6. The retorted fish composition of one of claims 1 to 5, wherein the structured plant protein product comprises soy protein and wheat protein; and:
- the fish meat comprises tuna; and wherein the retorted fish composition substantially has the flavor, texture, and color of tuna meat that has been retort cooked; or
- the fish meat comprises salmon; and wherein the retorted fish composition substantially has the flavor, texture, and color of salmon meat that has been retort cooked.

7. The retorted fish composition of claim 1, wherein said structured plant protein product comprising protein fibers is **characterized in that** at least 70% of the protein fibers comprising the structured plant protein product are contiguous to each other at less than a 45° angle when viewed in a horizontal plane

8. The retorted fish composition of one of claim 1 to 7, wherein said structured plant protein product comprising protein fibers comprises a soy protein material selected from the group consisting of soy protein isolate, soy protein concentrate, soy flour, and mixtures thereof.

9. A process for producing a retorted simulated fish composition, the process comprising:
(a) combining an appropriate colorant with a structured plant protein product comprising protein fibers to produce a colored-hydrated structured plant protein product;
(b) retort cooking the colored-hydrated structured plant protein product;
**characterized in that** at least 55% of the protein fibers comprising the structured plant protein product are contiguous to each other at less than a 45° angle when viewed in a horizontal plane and the structured plant protein product has an average shear strength of at least 2000 grams and an average shred characterization of at least 17% by weight of large pieces.

10. The process of claim 9, wherein the colorant is selected from the group consisting of an artificial color system, a natural color system, and combinations thereof.

11. The process of claim 9 or 10, wherein the colorant comprises a combination of cochineal extract, alum, and an organic acid; the retorted fish composition simulates retorted tuna meat, and the process further comprises adding to the colored-hydrated structured plant protein product an acidulent and an antioxidant.

12. A process for producing a retorted fish composition, the process comprising:
(a) combining an appropriate colorant with fish meat, and a structured plant protein product comprising protein fibers to produce a colored-hydrated fish composition;
(b) retort cooking the colored-hydrated fish composition;
**characterized in that** at least 55% of the protein fibers comprising the structured plant protein product are contiguous to each other at less than a 45° angle when viewed in a horizontal plane and the structured plant protein product has an average shear strength of at least 2000 grams and an average shred characterization of at least 17% by weight of large pieces.

13. The process of claim 12, wherein the fish meat is tuna or salmon and the colorant is selected from the group consisting of an artificial color system, a natural color system, and combinations thereof.

14. The process of claim 12 or 13, wherein the colorant comprises a combination of cochineal extract, alum, and an organic acid; the fish meat comprises tuna, and the process further comprises adding to the colored-hydrated fish composition an acidulent and an antioxidant.

15. The process of one of claims 9 to 14, wherein the structured plant protein product comprises soy protein and wheat protein; and wherein the retorted fish composition substantially has the color, texture, and flavor of retorted fish meat selected from the group consisting of tuna meat, mackerel, and salmon meat.

## Patentansprüche

1. Retort-sterilisierte Fischzusammensetzung, wobei die Fischzusammensetzung umfasst:
(a) ein strukturiertes Pflanzenproteinprodukt, das Proteinfasern umfasst sowie
(b) Fischfleisch;
**dadurch gekennzeichnet, dass** mindestens 55 % der das strukturierte Pflanzenproteinprodukt umfassenden Proteinfasern mit weiniger als einem Winkel von 45 ° aneinander ausgerichtet sind, wenn man sie in einer horizontalen Ebene betrachtet und dass das strukturierte Pflanzenproteinprodukt eine durchschnittliche Scherfestigkeit von mindestens 2000 Gramm und eine durchschnittliche Schroteigenschaft von mindestens 17 Gew.% großer Stücke aufweist.

2. Retort-sterilisierte Fischzusammensetzung nach Anspruch 1, wobei das Fischfleisch ausgewählt ist aus der Gruppe bestehend aus Thunfisch, Makrele und Lachs.

3. Retort-sterilisierte Fischzusammensetzung nach Anspruch 1 oder 2, wobei das strukturierte Pflanzenproteinprodukt von einer Pflanze stammt, die ausgewählt ist aus der Gruppe bestehend aus Hülsenfrüchten, Sojabohnen, Weizen, Hafer, Mais, Erbsen, Canola, Sonnenblumen, Reis, Amaranth, Lupine, Raps und Gemischen davon und/oder Sojaprotein und Weizenprotein umfasst.

4. Retort-sterilisierte Fischzusammensetzung nach einem der Ansprüche 1 bis 3, wobei die Konzentration des hydrierten in der Retort-sterilisierten Fischzusammensetzung vorkommenden Pflanzenproteinprodukts zwischen 5 und 99 Gew.% liegt und die Konzentration des in der retort-sterilisierten Fischzusammensetzung vorkommenden Fischfleischs zwischen 1 und 95 Gew.% liegt.

5. Retort-sterilisierte Fischzusammensetzung nach einem der Ansprüche 1 bis 4, die ferner einen Inhaltsstoff umfasst, der ausgewählt ist aus der Gruppe bestehend aus einem Vitamin, einem Mineral, einem Antioxidans, einer Omega-3 Fettsäure und einem Kraut; oder wobei die Retort-sterilisierte Fischzusammensetzung mit zusätzlichen Inhaltsstoffen zur Herstellung eines gewürzten Fischprodukts kombiniert wird.

6. Retort-sterilisierte Fischzusammensetzung nach einem der Ansprüche 1 bis 5, wobei das strukturierte Pflanzenproteinprodukt Sojaprotein und Weizenprotein umfasst und:
- das Fischfleisch Thunfisch umfasst und wobei die Retort-sterilisierte Fischzusammensetzung im Wesentlichen den Geschmack, die Struktur und die Farbe von Thunfischfleisch aufweist, welches Retort-gekocht wurde oder
- das Fischfleisch Lachs umfasst und wobei die Retort-sterilisierte Fischzusammensetzung im Wesentlichen den Geschmack, die Struktur und die Farbe von Lachsfleisch aufweist, welches Retort-gekocht wurde.

7. Retort-sterilisierte Fischzusammensetzung nach Anspruch 1, wobei das Proteinfasern umfassende Pflanzenproteinprodukt **dadurch gekennzeichnet ist, dass** mindestens 70 % der das strukturierte Pflanzenproteinprodukt umfassenden Proteinfasern mit weniger als einem Winkel von 45 ° aneinander ausgerichtet sind, wenn man sie in einer horizontalen Ebene betrachtet.

8. Retort-sterilisierte Fischzusammensetzung nach einem der Ansprüche 1 bis 7, wobei das Proteinfasern umfassende strukturierte Pflanzenproteinprodukt ein Sojaproteinmaterial umfasst, das ausgewählt ist aus der Gruppe bestehend aus Sojaproteinisolat, Sojaproteinkonzentrat, Sojamehl und Gemischen davon.

9. Verfahren zur Herstellung einer Retort-simulierten Fischzusammensetzung, welches umfasst:
(a) das Kombinieren eines geeigneten Farbstoffs mit einem strukturierten Pflanzenproteinprodukt, das Proteinfasern umfasst zur Herstellung eines gefärbt-hydrierten strukturierten Pflanzenproteinproduktes;
(b) das Retort-Kochen des gefärbt-hydrierten strukturierten Pflanzenprodukts;
**dadurch gekennzeichnet, dass** mindestens 55 % der das strukturierte Pflanzenproteinprodukt umfassenden Proteinfasern mit weniger als einem Winkel von 45 ° aneinander ausgerichtet sind, wenn man sie in einer horizontalen Ebene betrachtet und dass das strukturierte Pflanzenproteinprodukt eine durchschnittliche Scherfestigkeit von mindestens 2000 Gramm und eine durchschnittliche Schroteigenschaft von mindestens 17 Gew.% großer Stücke aufweist.

10. Verfahren nach Anspruch 9, wobei der Farbstoff ausgewählt ist aus der Gruppe bestehend aus einem künstlichen Farbsystem, einem natürlichen Farbsystem und Kombinationen davon.

11. Verfahren nach Anspruch 9 oder 10, wobei der Farbstoff eine Kombination von Cochenilleextrakt, Alaun und einer organischen Säure umfasst; wobei die Retort-sterilisierte Fischzusammensetzung Retortsterilisiertes Thunfischfleisch simuliert und das Verfahren ferner die Zugabe eines Säuerungsmittels und eines Antioxidans zu dem gefärbt-hydrierten strukturierten Pflanzenproteinprodukt umfasst.

12. Verfahren zur Herstellung einer Retort-sterilisierten Fischzusammensetzung, welches umfasst:
(a) das Kombinieren eines geeigneten Farbstoffs mit Fischfleisch und einem strukturierten Pflanzenproteinprodukt, das Proteinfasern umfasst zur Herstellung einer gefärbt-hydrierten Fischzusammensetzung;
(b) das Retort-Kochen der gefärbt-hydrierten Fischzusammensetzung;
**dadurch gekennzeichnet, dass** mindestens 55 % der das strukturierte Pflanzenproteinprodukt umfassenden Proteinfasern mit weniger als einem Winkel von 45 ° aneinander ausgerichtet sind, wenn man sie in einer horizontalen Ebene betrachtet und dass das strukturierte Pflanzenproteinprodukt eine durchschnittliche Scherfestigkeit von mindestens 2000 Gramm und eine durchschnittliche Schroteigenschaft von mindestens 17 Gew.% großer Stücke aufweist.

13. Verfahren nach Anspruch 12, wobei das Fischfleisch Thunfisch oder Lachs ist und der Farbstoff ausgewählt ist aus der Gruppe bestehend aus einem künstlichen Farbsystem, einem natürlichen Farbsystem und Kombinationen davon.

14. Verfahren nach Anspruch 12 oder 13, wobei der Farbstoff eine Kombination von Cochenilleextrakt, Alaun und einer organischen Säure umfasst; das Fischfleisch Thunfisch umfasst und das Verfahren ferner die Zugabe eines Säuerungsmittels und eines Antioxidans zu der gefärbt-hydrierten Fischzusammensetzung umfasst.

15. Verfahren nach einem der Ansprüche 9 bis 14, wobei das strukturierte Pflanzenprotein Sojaprotein und Weizenprotein umfasst und wobei die Retort-sterilisierte Fischzusammensetzung im Wesentlichen die Farbe, die Struktur und den Geschmack von Retortsterilisiertem Fischfleisch aufweist, das ausgewählt ist aus der Gruppe umfassend Thunfischfleisch, Makrele und Lachsfleisch.

## Revendications

1. Une composition de poisson autoclavée, cette composition de poisson comprenant:
(a) un produit protéique végétal structuré comprenant des fibres protéiques; et
(b) de la chair de poisson;
**caractérisé en ce que** au moins 55% des fibres protéiques comprenant le produit protéique végétal structuré sont contiguës les unes par rapport aux autres, formant un angle inférieur à 45° lorsqu'elles sont vues dans un plan horizontal, et le produit protéique végétal structuré présente une résistance au cisaillement moyenne d'au moins 2000 grammes et une caractéristique de déchiquetage moyenne d'au moins 17% en poids de grandes pièces.

2. La composition de poisson autoclavée selon la revendication 1, dans laquelle la chair de poisson est choisie dans le groupe formé par le thon, le maquereau et le saumon.

3. La composition de poisson autoclavée selon la revendication 1 ou 2, dans laquelle le produit protéique végétal structuré est dérivé d'un végétal choisi parmi le groupe formé par les légumes, le soja, le blé, l'avoine, le maïs, les pois, le colza, le tournesol, le riz, l'amarante, le lupin, les graines de navettes et leurs mélanges; et/ou comprend de la protéine de soja et de la protéine de blé.

4. La composition de poisson autoclavée selon une quelconque des revendications 1 à 3, dans laquelle la concentration en produit protéique végétal structuré hydraté présent dans la composition de poisson autoclavée est comprise entre 5% et 99% en poids et la concentration en chair de poisson présente dans la composition de poisson autoclavée est comprise entre 1 % et 95% en poids.

5. La composition de poisson autoclavée selon une quelconque des revendications 1 à 4, comprenant en outre un ingrédient choisi dans le groupe formé par une vitamine, minéraux, un antioxydant, un acide gras oméga-3 et une herbe aromatique ou dans laquelle la composition de poisson autoclavée est combinée à des ingrédients additionnels pour produire un produit de poisson assaisonné.

6. La composition de poisson autoclavée selon une quelconque des revendications 1 à 5, dans laquelle le produit protéique végétal structuré comprend de la protéine de soja et de la protéine de blé; et:
- la chair de poisson comprend du thon; et dans laquelle la composition de poisson autoclavée a substantiellement la flaveur, la texture et la couleur de la chair de thon après cuisson dans un autoclave; ou
- la chair de poisson comprend du saumon; et dans laquelle la composition de poisson autoclavée a substantiellement la flaveur, la texture et la couleur de la chair de saumon après cuisson dans un autoclave.

7. La composition de poisson autoclavée selon la revendication 1, dans laquelle ledit produit protéique végétal structuré comprenant des fibres protéiques est **caractérisé en ce qu'**au moins 70% des fibres protéiques comprenant le produit protéique végétal structuré sont contiguës les unes par rapport aux autres, formant un angle inférieur à 45°, lorsqu'elles sont vues dans un plan horizontal.

8. La composition de poisson autoclavée selon une quelconque des revendications 1 à 7, dans laquelle ledit produit protéique végétal structuré comprenant des fibres protéiques comprend un matériau protéique de soja choisi dans le groupe formé par l'isolat de protéines de soja, le concentré de protéines de soja, la farine de soja et leurs mélanges.

9. Un procédé pour produire une composition simulée de poisson autoclavée, ce procédé comprenant:
(a) la combinaison d'un colorant approprié avec un produit protéique végétal structuré comprenant des fibres protéiques pour produire un protéique végétal structuré, hydraté et coloré;
(b) la cuisson en autoclave du produit protéique végétal structuré coloré et hydraté ;
**caractérisé en ce que** au moins 55% des fibres protéiques comprenant le produit protéique végétal structuré sont contiguës les unes par rapport aux autres, formant un angle inférieur à 45°, lorsqu'elles sont vues dans un plan horizontal et le produit protéique végétal structuré présente une résistance au cisaillement moyenne d'au moins 2000 grammes et une caractéristique de déchiquetage moyenne d'au moins 17% en poids de grandes pièces

10. Le procédé selon la revendication 9, dans laquelle le colorant est choisi dans le groupe formé par un système de couleur artificielle, un système de couleur naturelle et leurs combinaisons.

11. Le procédé selon la revendication 9 ou 10, dans laquelle le colorant comprend une combinaison d'extrait de cochenille, de l'alun et d'un acide organique; la composition de poisson autoclavée simule la chair de thon autoclavée et le procédé comprenant en outre l'addition au produit protéique végétal structuré hydraté et coloré d'un acidulant et d'un antioxydant.

12. Un procédé pour produire une composition de poisson autoclavé, ce procédé comprenant:
(a) la combinaison d'un colorant approprié avec de la chair de poisson et un produit protéique végétal structuré comprenant des fibres protéiques pour produire une composition de poisson hydratée et colorée;
(b) la cuisson en autoclave de la composition de poisson hydratée et colorée ;
**caractérisé en ce que** au moins 55% des fibres protéiques comprenant le produit protéique végétal structuré sont contiguës les unes par rapport aux autres, formant un angle inférieur à 45°, lorsqu'elles sont vues dans un plan horizontal et le produit protéique végétal structuré présente une résistance au cisaillement moyenne d'au moins 2000 grammes et une caractéristique de déchiquetage moyenne d'au moins 17% en poids de grandes pièces

13. Le procédé selon la revendication 12, dans laquelle la chair de poisson est le thon ou le saumon et le colorant est choisi dans le groupe formé par un système de couleur artificielle, un système de couleur naturelle et leurs combinaisons

14. Le procédé selon la revendication 12 ou 13, dans laquelle le colorant comprend une combinaison d'extrait de cochenille, de l'alun et un acide organique; la chair de poisson comprend du thon et le procédé comprend en outre l'addition à la composition de poisson hydratée et colorée d'un acidulant et d'un antioxydant.

15. Le procédé selon une quelconque des revendications 9 à 14, dans laquelle le produit protéique végétal structuré comprend de la protéine de soja et de la protéine de blé; et dans lequel la composition de poisson autoclavée a substantiellement la flaveur, la texture et la couleur de la chair de poisson autoclavée choisie dans le groupe formé par la chair de thon, la chair de maquereau et la chair de saumon.
